# EUROPEAN PATENT APPLICATION

(11) **EP 1 455 514 A1**
(43) Date of publication of application: **08.09.2004**
(21) Application number: 03022522.1
(22) Date of filing: 02.10.2003
(51) Int. Cl.: H04N 1/00, H04N 1/387

(54) **Method and apparatus for printing on a partially-printed medium**

(30) Priority: 28.02.2003 US 376856
(71) Applicant: Hewlett-Packard Development Company, L.P., Houston, Texas 77070 (US)
(72) Inventor: Eveland, Michael J., Temecula, CA 92592 (US); Koppel, Caroline D., San Diego, CA 92129 (US)
(74) Representative: Schoppe, Fritz, Dipl.-Ing.

(57) **Abstract**

A system (10) for printing at least one image on a partially-printed medium (50). The system (10) includes a print detector (20) that is adapted to scan the partially-printed medium (50) so as to form scan data (24), and a controller (30) coupled to the print detector (20) that is adapted to analyze the scan data (24) so as to identify at least one unprinted region (54,55) on the medium (50). A print engine (40) coupled to the controller (30) is adapted to print one or more of the images in the unprinted region or regions (54,55).

## Description

### Background of the Invention

The image rendering capability of digital printing systems and peripheral devices, such as laser and inkjet printers which are commonly connected to computers, have been improved to the point where the image quality of printed digital images is competitive with images produced by photographic and other high-quality printing processes. In order to achieve the highest possible quality from these printing systems and devices, special photographic-quality print media is often required. Such media can be relatively expensive; for example, sheets of letter-size or A4-size photographic-quality print media may cost as much as $1.00 per sheet.

In some situations, however, users may not want to print images in a size that is as large as the media sheet. For example, a user may choose to print images in a smaller, 3-1/2 by 5 inch size. Printing less than a sheet full of these smaller images on a larger sheet of media results in sheets that are only partially printed. Such partially-printed sheets contain a significant amount of unprinted area, which becomes wasted space. Having large amounts of wasted space can become quite expensive, since additional sheets of expensive media will be required to print the same number of total images. Additionally, the user may not have the additional sheets of media on hand, which could inconveniently prevent him from printing the images he desires.

For these and other reasons, there is a need for the present invention.

### Summary of the Invention

The above-stated needs and others are met, for example, by one embodiment of the present invention that provides a system for printing at least one image on a partially-printed medium. The system includes a print detector that is adapted to scan the partially-printed medium so as to form scan data, and a controller coupled to the print detector that is adapted to analyze the scan data so as to identify at least one unprinted region on the medium. A print engine coupled to the controller is adapted to print one or more of the images in the unprinted region or regions.

### Brief Description of the Drawings

The features of the present invention and the manner of attaining them, and the invention itself, will be best understood by reference to the following detailed description of embodiments of the invention, taken in conjunction with the accompanying drawings, wherein:

FIG. 1 is a block diagram of a printing system according to an embodiment of the present invention;

FIG. 2 is a block diagram of an embodiment of a controller according to the present invention usable with the printing system of FIG. 1;

FIG. 3 is a schematic representation of a printing system according to another embodiment of the present invention;

FIG. 4 is a schematic representation of an embodiment according to the present invention of a printer usable with the printing system of FIG. 3;

FIG. 5 is an schematic representation of an embodiment according to the present invention of a spot sensor usable with the printing system of FIG. 3;

FIG. 6 is a perspective view of a multifunction printing device according to a further embodiment of the present invention;

FIG. 7 is a flowchart in accordance with an embodiment of the present invention of a method for printing on a partially-printed medium;

FIG. 8 is a lower-level flowchart in accordance with an embodiment of the present invention of a portion of the method of FIG. 7 for scanning the partially-printed medium to determine unprinted regions;

FIG. 9 is a schematic representation of an exemplary partially-printed medium illustrative of the operation of the method of FIG. 8;

FIG. 10 is a lower-level flowchart in accordance with an embodiment of the present invention of a portion of the method of FIG. 8 for defining the size and location of unprinted regions;

FIG. 11 is a lower-level flowchart in accordance with an embodiment of the present invention of a portion of the method of FIG. 7 for determining if target images fit in unprinted regions;

FIGS. 12A-12C are schematic representations of an exemplary partially-printed medium and target image illustrative of the operation of the method of FIG. 11; and

FIG. 13 is a lower-level flowchart in accordance with an embodiment of the present invention of a portion of the method of FIG. 7 for printing target images in unprinted regions.

### Description of the Preferred Embodiments

Referring now to the drawings, there is illustrated an embodiment of a printing system constructed in accordance with the present invention which can print at least one image on a partially-printed medium. A print detector is adapted to scan the partially-printed medium to form scan data representative of any printing already deposited on the medium. A controller receives the scan data from the print detector and analyzes the scan data in order to identify one or more unprinted regions on the medium. The controller further instructs a print engine to print one or more desired images in the unprinted regions.

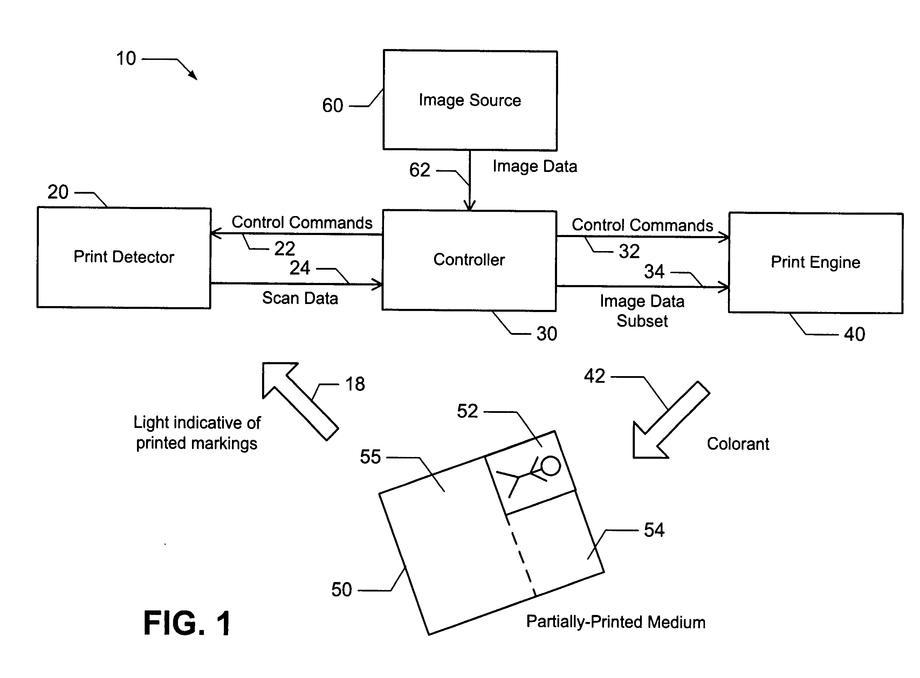

As best understood with reference to FIG. 1, one embodiment of a printing system 10 according to the present invention includes a print detector 20, a controller 30, and a print engine 40. The controller 30 issues control commands 22 to the print detector 20, and receives scan data 24 from the print detector 20. In some embodiments, the control commands 22 may include commands to position the print detector 20 at a specified location with respect to an exemplary print medium 50. The scan data 24 provided to the controller 30 by the print detector 20 is generally indicative of whether printing is present on the medium 50, and if printing is present, at what locations on the medium 50. As will be discussed subsequently in greater detail, the print detector 20 is capable of detecting reflected light 18 indicative of printed markings at a specified location. For example, medium 50 is partially printed, containing a single printed region 52.

From its analysis of the scan data 24, the controller 30 identifies one or more unprinted regions on the medium. Each unprinted region has a region size and a region location. For example, the exemplary medium 50 has two unprinted regions 54,55.

Image data 62 is provided to the controller 30 by an image source 60. The image data 62 is indicative of one or more images, each of which is desired to be printed in a certain image size on the medium 50. As will be discussed subsequently in greater detail, embodiments of image source 60 may be, for example, a scanning arrangement, a computing arrangement, or an image memory arrangement. As will also be discussed subsequently in greater detail, the controller 30 determines, from the number and region sizes of the unprinted regions 54,55, whether some or all of the images can be printed in their associated image sizes on the partially-printed medium 50. For those images that can be printed on the partially-printed medium 50, the controller 30 further determines in which of the unprinted regions 54,55 each image is to be printed. More than one image may be printed in an individual unprinted region. In order to optimize the printing of as many images as possible, the controller 30 may change the orientation of some of the images, for example, by rotating an image 90 degrees so as to better fit the images to an unprinted region 54,55.

Based on its determination of which images in the image data 62 can be printed on the partially-printed medium 50, the controller 30 issues control commands 32 and a subset 34 of the image data 62 to the print engine 40. The image data subset 34 contains the image data for those images which are to be printed on the medium 50. The control commands 32 typically include commands which cause the print engine 40 to be positioned adjacent the unprinted regions of the medium 50, and commands which cause colorant 42 to be directly or indirectly deposited from the print engine 40 onto the unprinted regions.

As will be discussed subsequently in greater detail, the controller 30 may be disposed in a computer or a printer. The print detector 20 may also be disposed in the printer.

Before describing the system 10 in greater detail, it is helpful to consider the medium 50 in greater detail. The medium 50 may be formed of paper stock, resin-coated stock, or fabric. Resin-coated stock is typically used for photographic-quality imaging applications. The unprinted medium is typically white in color, but may alternatively be colored, or may contain a background pattern. The background pattern would typically be light in color, such that printing would be visible despite the background pattern. The pre-existing printing, such as image 52, that is present on medium 50 may be previously produced by the printing system 10, or may have been pre-printed on the medium 50 by other means such as traditional offset printing processes.

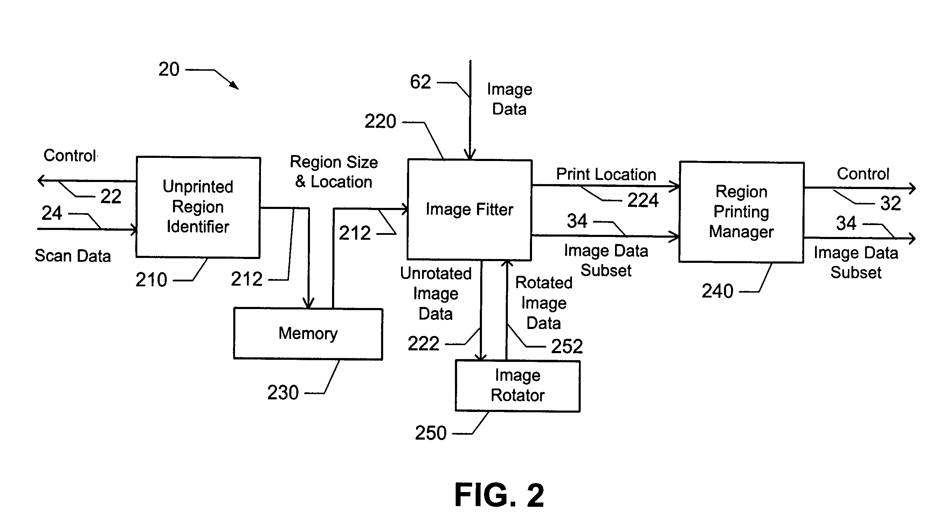

Considering now in greater detail an embodiment of the controller 30, and with reference to FIG. 2, the controller 30 includes an unprinted region identifier module 210 that processes the scan data 24 so as to identify the unprinted regions, such as unprinted regions 54,55 of exemplary medium 50. The scan data 24 generally includes data indicative of whether or not printing is present at a variety of known locations on the medium. As will be discussed subsequently in greater detail, the unprinted region identifier 210 processes this data so as to identify the region size and region location 212 of each unprinted region on the medium. As will also be discussed subsequently in greater detail, in some embodiments the scan data 24 includes reflectance data for the variety of locations on the print medium, and the unprinted region identifier 210 identifies each unprinted region as corresponding to a two-dimensional area of those positions for which the reflectance data exceeds a threshold value.

The region size and region location 212 of each unprinted region 54,55 are provided to an image fitter module 220. In some embodiments, the region size and region location 212 may be stored in a memory 230 from which they can be retrieved by the image fitter 220. The image fitter 220 receives the image data 62 and maps at least some of the images represented therein to one or more of the unprinted regions 54,55. In order to optimally fit the images to the unprinted regions, the image fitter 220 may send unrotated image data 222 to an image rotator module 250 and receive rotated image data 252 in response. Typically the image is rotated 90 degrees, but other amounts of rotation may be performed. The operation of the image fitter 220 will be discussed subsequently in greater detail.

The image fitter 220 sends print location information 224 and a subset 34 of the image data 62 to a region printing manager module 240. The image data subset 34 contains the image data for those images which have been mapped to unprinted regions 54,55 on the medium 50. The print location information 224 identifies the location of the unprinted region on the print medium 50 at which each corresponding image in the image data subset 34 is to be printed. The region printing manager 240 controls the print engine 40 by providing control commands 32 and the image data subset 34 to the print engine 40 so as to print the mapped images in the corresponding unprinted regions 54,55.

Each of the unprinted region identifier module 210, the image fitter module 220, the region printing manager 240, and the image rotator module 250 may be implemented in hardware, such as an ASIC device, or as a program stored in a computer-readable storage medium and executed by a processor in the printing system 10.

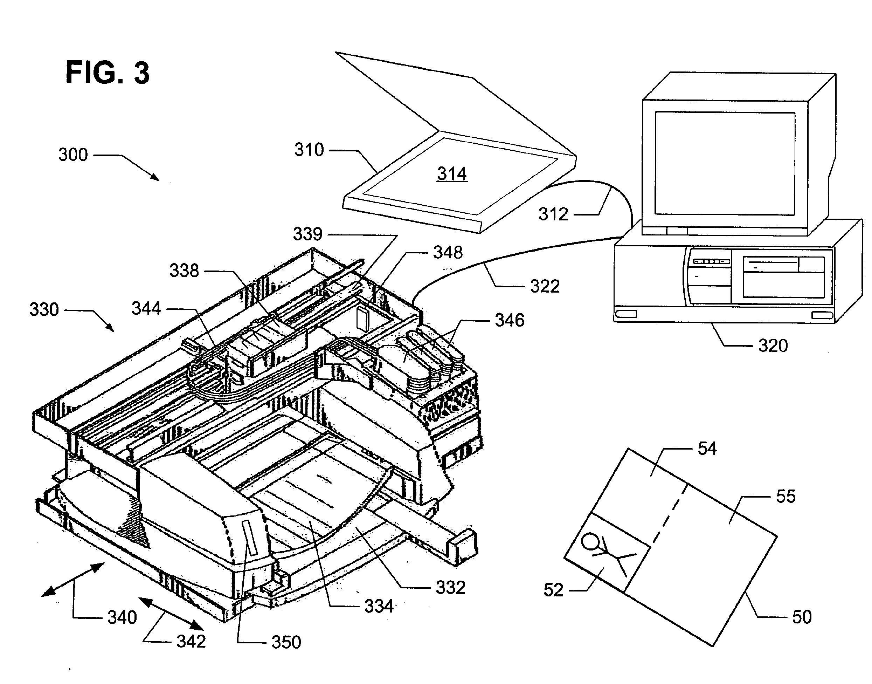

Considering now additional embodiments of the present invention, and with reference to FIG. 3, a system 300 includes a printer 330 coupled to a computer 320 via connection 322. A scanner 310 may also be coupled to the computer 320 via connection 312. While connections 312,322 are illustrated as wired connections according to protocols such as, for example, Centronics parallel, RS-232 serial, USB, or Firewire, it should be understood that connections 312,322 may alternatively be wireless connections, such as IR (infrared) or RF connections, according to protocols such as, for example, Wi-Fi or Bluetooth.

The computer 320, which typically includes one or more processors and one or more computer-readable storage media, provides image data to the printer 330 for printing. The image data may be digitally stored on an image memory arrangement which includes a memory device, such as a disk drive, CD-ROM, floppy disk, memory card, and the like, which is located in or accessible by the computer 320. The image data may also be provided to the computer 320 by a scanning arrangement such as scanner 310; for example, image data representing a photographic image placed on the scanner platen 314. A program executing on the computer 320 typically determines the desired image size for each image to be printed, and sends the image data to the printer 330.

Considering now the printer 330 in greater detail, print media, such as partially-printed medium 50, is supplied to input tray 332. During a printing operation, a sheet of media is picked from input tray 332, printed by the print engine, and placed in output tray 334. In one embodiment of printer 330 which includes an inkjet print engine, a carriage 336 holding one or more printheads 338 reciprocates along slider rod 339 in a scan direction 340 substantially orthogonal to the media direction 342 in which the media is moved through the printer. A supply of ink may be mounted on the carriage 336 along with each printhead 338, or alternatively may be supplied to each printhead 338 through tubing 344 from a corresponding ink reservoir 346 located off the carriage 336. Typically each printhead 338 is connected to a different color supply of ink; for example, black, magenta, cyan, and yellow, which can be combined to form a variety of colors. A processing module 348 may include a processor and a computer-readable storage medium.

It should be noted that other types of print engines may be utilized with the present invention. In another embodiment, the printheads have a width that is as wide as the print medium and thus reciprocation of the carriage is unnecessary. The print engine may including a rotating drum. The print engine may not deposit colorant directly on the medium, but may instead deposit it on a transfer medium which in turn deposits the colorant on the medium to be printed. The print engine may utilizes other types of technology, such as laser printing technology.

In some embodiments, the printer 330 may contain a memory interface 350 that is adapted to receive a memory device containing the image data for one or more digital images. The memory device may be of various types, including PCMCIA cards, CompactFlash cards, SmartMedia cards, Memory Stick cards, and the like. The printer 330 may also include a user interface that may be used to select the images to be printed, and for each selected image specify the number of copies to be printed and the image size or sizes for each of the copies. The user interface may include an arrangement of controls such as pushbuttons, and a display device like an alphanumeric display or a matrix display

In one embodiment, the computer 320 locates the unprinted regions of the partially printed medium, such as exemplary partially-printed medium 50, and fits the images to the unprinted regions 54,55. In this embodiment, the image data sent to the printer 330 is manipulated in the computer 320 such that it does not contain any data to be printed at previously printed regions, such as region 52, of the medium 50. In order to determine the locations of the printed 52 and unprinted 54,55 regions, the partially-printed medium 50 is placed on the scanner platen 314 in a particular orientation and then scanned. The computer 320 then processes the scan data to locate the regions. After being scanned, the partially-printed medium 50 is retrieved from the scanner platen 314 and placed in the input tray 332 in an orientation corresponding to its prior orientation on the scanner platen, so that the unprinted regions 54,55 of the medium 50 will be correctly oriented with the image data. Typically this retrieval and placement of the medium 50 is a manual operation by the user.

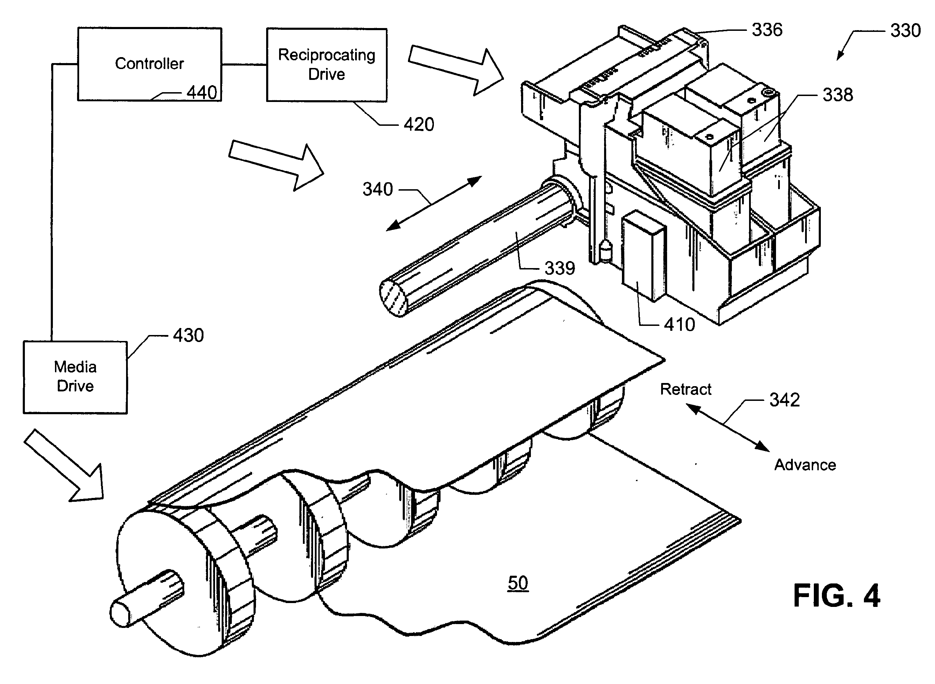

In another embodiment, and as best understood with reference to FIG. 4 as well as FIG. 3, the computer 320 does not determine whether or where the printed 52 or unprinted 54,55 regions are located on the medium 50. In this embodiment, the image data sent to the printer 330 represents the images to be printed and the corresponding image size of each image, but not where on the medium 50 they are to be printed. Rather, the print detector is disposed in printer 330, and printer 330 scans the partially-printed medium 50 to locate the unprinted regions 54,55. The printer 330 includes a sensor 410 mounted in the printer 330 for movement with respect to the medium 50. In one embodiment, the sensor 410 is mounted to the reciprocating carriage 336. The sensor 410 produces scan data indicative of whether printing is present at locations of the medium 50 that are positioned adjacent the sensor 410. The printer 330 also includes a motion arrangement that moves the sensor 410, the medium 50, or both relative to each other so as to produce scan data for substantially all the unprinted portions 54,55 of the medium 50. In one embodiment, the motion arrangement includes a reciprocating drive mechanism 420 that programmatically reciprocates the carriage 336, including the sensor 410, back and forth along the scan axis 340, and a media drive mechanism 430 that advances the medium 50 through the printer 330 in one direction along axis 342. The media drive mechanism 430 may also retract the medium back into the printer in the opposite direction along axis 342. The reciprocating drive mechanism 420 and the media drive mechanism 430 each typically include a motor and other drive train components.

The printer 330 also includes a controller 440. The controller 440 may be implemented in the processing module 348. The controller 440 receives the image data via link 322, or alternatively accesses the image data stored on a memory card inserted in memory interface 350. The controller 440 controls the operation of the reciprocating drive 420 and the media drive 430. In a scan operation, the controller 440 operates the reciprocating drive 420 and the media drive 430 to advance and scan the medium 50, and accesses the sensor 410 to read the scan data. The controller 440 further analyzes the scan data so as to identify the unprinted regions 54,55 on the medium 50, and determine which images are to be printed in each of the unprinted regions 54,55. In some embodiments, the controller 440 also operates the media drive 430 to retract the medium 50 to an initial position, and then operates the reciprocating drive 420 and the media drive 430 to readvance and print the medium 50. In other embodiments, the medium 50 is not automatically retracted after scanning and instead is manually replaced in the input tray 332 by the user in the same orientation as it was previously. The controller 440 additionally operates ink ejection elements in the printheads 338 to cause drops of the colored inks to be deposited on the medium 50. By appropriately synchronizing the operation of the reciprocating drive 420, media drive 430, and printheads 338, printed images corresponding to the image data are formed in the unprinted regions 54,55 of the partially-printed medium 50.

Note that while the printer 330 has been described above with relation to printheads 338 that are less than the width of the media and therefore are reciprocated in order to print on the entire width, with the reciprocating carriage 336 providing a convenient means for positioning the sensor 410 at different positions along axis 340, the present invention may also be used in an alternate embodiment having a stationary, page-wide printhead array. In such a configuration, the sensor 410 can be mounted to a smaller carriage or another reciprocating arrangement that is reciprocated during the scanning of the partially-printed medium 50, but does not require movement during the printing of additional images on the partially-printed medium 50.

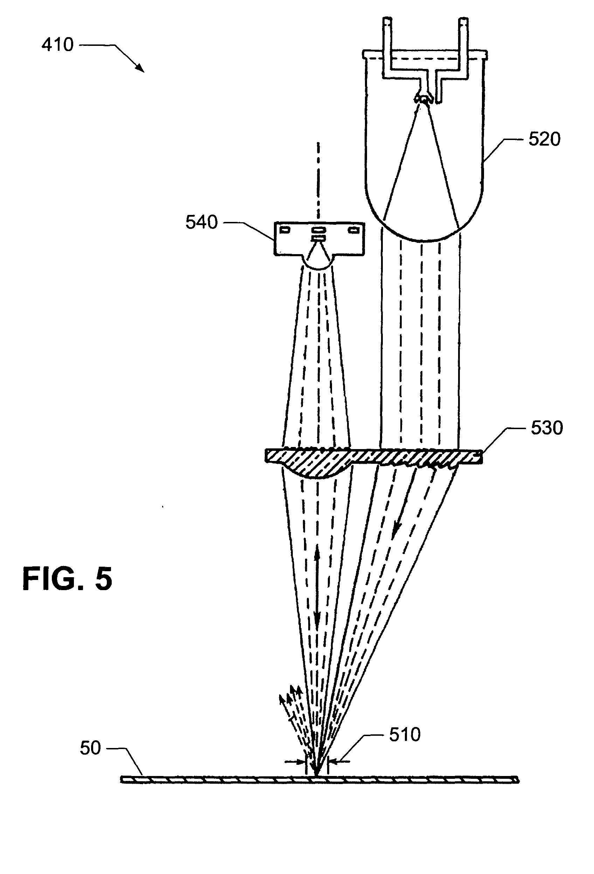

Considering now in greater detail an embodiment of the sensor 410, and with reference to FIG. 5, the sensor 410 may be a spot sensor that measures a reflectance of light from a spot or position 510 on the medium 50 that is adjacent the spot sensor. The sensor 410 includes a light source 520 that generates incident light that is directed onto the position 510 by a portion of an optical arrangement 530, and a light detector 540 that measures reflected light from the position 510 that is directed to the detector 640 by another portion of the optical arrangement 530. In some embodiments, the light source 520 is a light-emitting diode. The incident light emitted from the diode may be of a certain wavelength or range of wavelengths, which may correspond to blue light, violet light, or white light. As the sensor 410 is moved adjacent to different positions 510 on the partially-printed medium 50 during a scan operation, the controller 440 reads the measured level of reflected light from the light detector 40. If the reflected light exceeds a predefined threshold, the position 510 may be considered to be unprinted. Conversely, if the reflected light is less than a predefined threshold, the position 510 may be considered to be printed. As the sensor 410 is positioned adjacent a matrix of different locations on the medium 50 through operation of the reciprocating drive 420 and the media drive 430 by the controller 440, a corresponding matrix of reflected light measurements can be constructed and used to determine the unprinted regions 54,55, as will be discussed subsequently in greater detail.

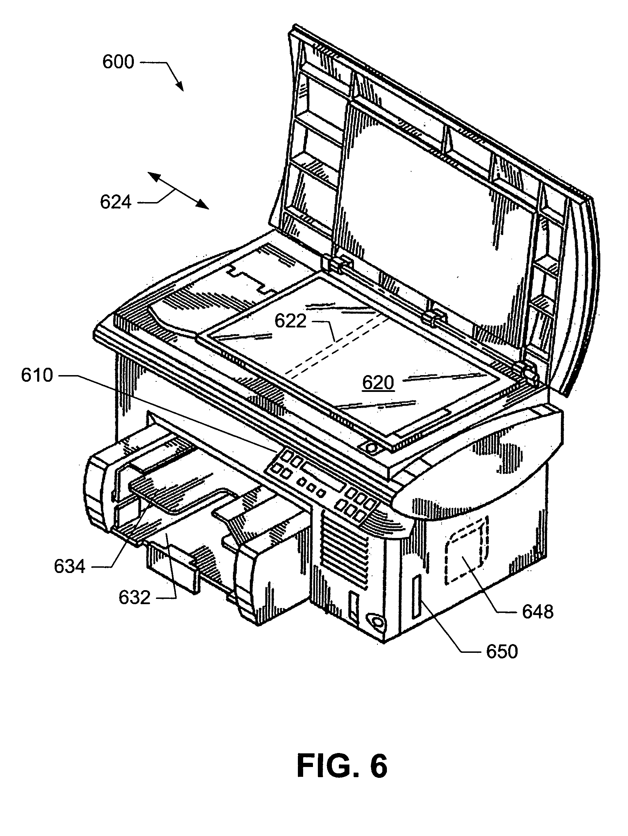

Considering now a further embodiment of the present invention, and with reference to FIG. 6, a multifunction printing device 600, often called an "all-in-one" or an "MFP", typically includes features that allow it to function as at least a printer, a scanner, and a copier. Print media, such as partially-printed medium 50, is supplied to input tray 632. During a printing operation, a sheet of media is picked from input tray 632, printed by the print engine (not shown), and placed in output tray 634. In one embodiment, multifunction printing device 600 includes an inkjet print engine as described heretofore with reference to FIGS. 3 and 4. A processing module 648 may include a processor and a computer-readable storage medium. In some embodiments, the multifunction printing device 600 may contain a memory interface 650 that is adapted to receive a memory device containing the image data for one or more digital images, as described heretofore. The multifunction printing device 600 may also include a user interface 610 that can be operated to select the images to be printed, and for each selected image to specify the number of copies to be printed and the image size or sizes for each of the copies. The user interface 610 may include an arrangement of controls such as pushbuttons, and one or more display devices such as an alphanumeric display or a matrix display.

The multifunction printing device 600 also includes a scanning arrangement adapted to generate the image data for a physical item placed adjacent the scanning arrangement. One embodiment of the scanning arrangement is a flatbed scanner that includes a platen 620 on which the physical item, such as a sheet of media, a photograph, a book, or the like, may be placed, and a scan bar 622. The scan bar 622 typically contains a light source and an array of light detectors arranged along the axis of the scan bar 622. During scanning, the scan bar 622 is moved along axis 624.

The scanning arrangement may be used to provide the image data. When used in this manner, the physical item is placed on the platen 620. The user interface features 610,612 may be used to select the number of copies, and the image size for each of the copies, for the resulting printed output on the partially-printed medium 50.

In one embodiment, the MFP 600 includes a spot sensor 410 as has been described previously with regard to FIGS. 3 and 4, for use in identifying the unprinted regions 54,55 on the medium 50. In another embodiment, the scanning arrangement may be used to scan the partially-printed medium 50 to determine the unprinted regions 54,55. When used in this manner, the medium 50 is placed on the platen 620 in a particular orientation and then scanned. The multifunction printing device 600 then processes the scan data to locate the unprinted regions. After being scanned, the partially-printed medium 50 is retrieved from the platen 620 and placed in the input tray 632 in an orientation corresponding to its prior orientation on the platen, so that the unprinted regions 54,55 of the medium 50 will be correctly oriented with the image data. Typically this retrieval and placement of the medium 50 is a manual operation performed by the user.

Another embodiment of the scanning arrangement is a sheet-fed scanner in which the physical item is fed by a document feeder (not shown) past a fixed-position scan bar. Such a scanning arrangement is generally limited to scanning sheets of media.

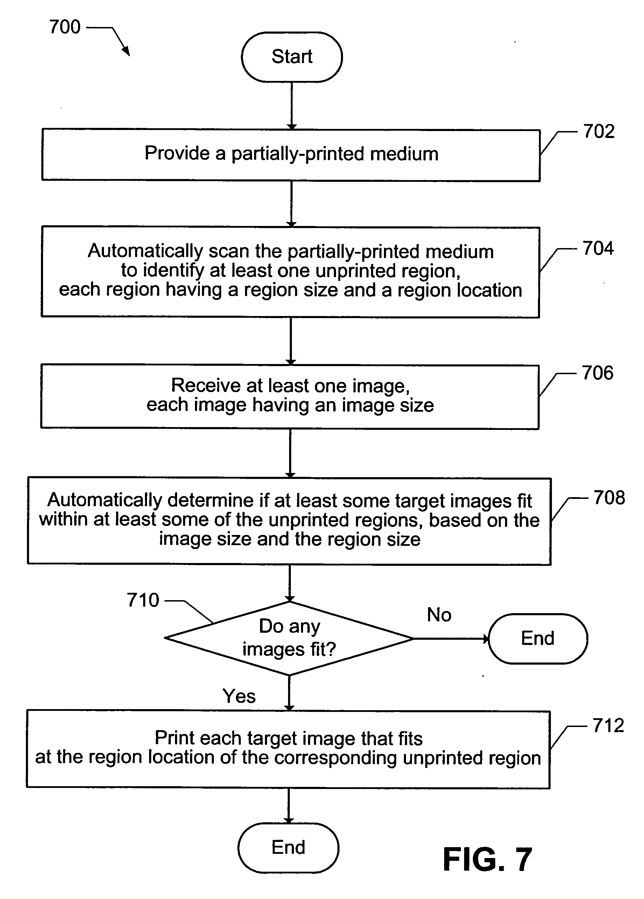

Another embodiment of the present invention, as best understood with reference to FIG. 7, is a method of printing on a partially-printed medium. The method may be implemented in a controller, a computer, or a combination of a controller and a computer. Alternatively, FIG. 7 can be considered as a flowchart of a controller of a printing system or a multifunction printer. The method 700 begins at 702 by providing a partially-printed medium. In some embodiments, the medium is inserted in an input tray of a printing system or device in a given orientation. At 704, a partially-printed medium, such as medium 50, is automatically scanned to identify at least one unprinted region, such as unprinted regions 54,55, on the medium, and to further identify the region size and region location of each unprinted region. At 706, at least one image is received. Each image has an associated image size. In some embodiments, receiving the image or images includes scanning at least one physical item to form at least one corresponding image, and specifying the image size of each image. At 708, the method automatically determines if at least some target images fit within at least some of the unprinted regions. The determination is performed by comparing the image size of an image with the region size of an unprinted region. Some or all of the received images may be designated as target images, as will be discussed subsequently in greater detail. At 710, it is determined whether any of the target images will fit in unprinted regions. If no target images fit any unprinted region ("No" branch of 710), the method ends. If at least some of the target images fit ("Yes" branch of 710), then at 712 each target image that fits is printed at the region location of the unprinted region that corresponds to the target image, and the method concludes.

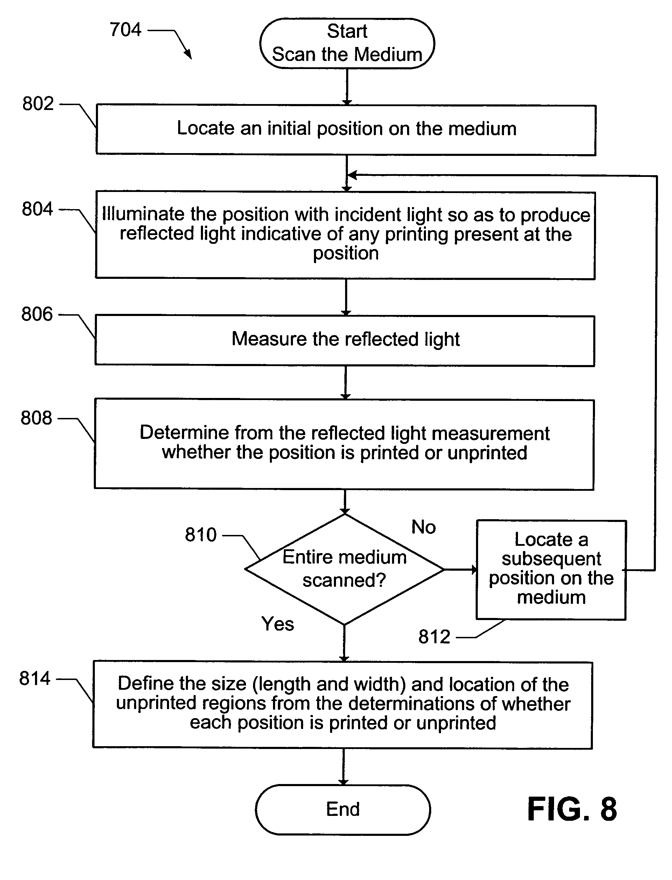

Considering now in greater detail an embodiment of the scanning 704 of the medium to identify unprinted regions, and with reference to FIG. 8, at 802 an initial position on the medium is located. This establishes a current position. In some embodiments, locating the initial position includes placing the medium in a given orientation in an input tray, picking the medium from the input tray, and advancing the medium in a first direction to an initial position. At 804, the current position on the medium is illuminated with incident light so as to produce reflected light indicative of any printing that is present at the position. At 806, the reflected light is measured. At 808, whether the position is printed or unprinted is determined from the reflected light measurement. If the reflectance is above a certain threshold, the position is determined to be unprinted. At 810, if the entire medium has not been scanned ("No" branch of 810), then at 812 a subsequent position on the medium is located, establishing a new current position, and the method branches to 804. In some embodiments, locating the subsequent position includes advancing the medium in the first direction to the subsequent position. If the entire medium has been scanned ("Yes" branch of 810), then at 814, and as will be discussed subsequently in greater detail, the region size and region location of the unprinted regions of the medium are defined, based on the determinations of whether each position on the medium is printed or unprinted.

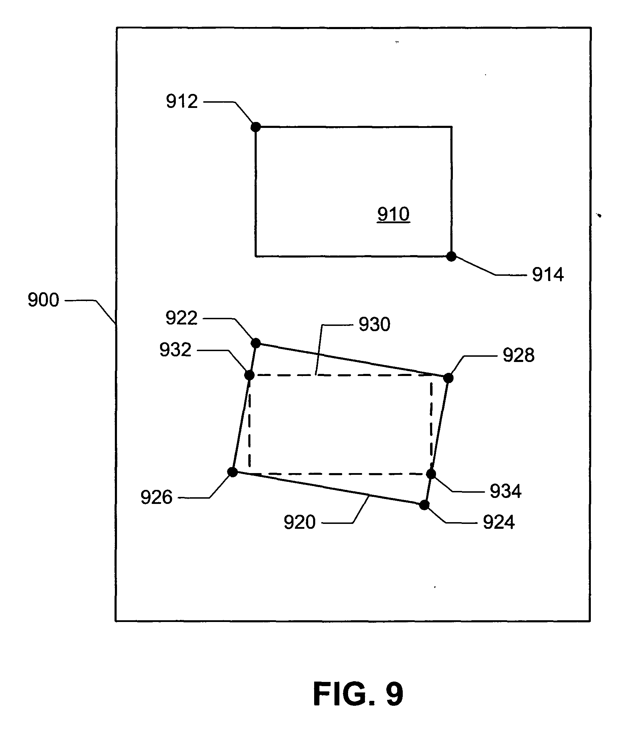

Before considering in greater detail an embodiment of the defining 814 of the region size and region location of an unprinted region, it is useful to consider, with reference to FIG. 9, the geometry of an unprinted region. In some embodiments, the unprinted regions are rectangular in shape. Partially-printed exemplary medium 900 illustrates two rectangular unprinted regions 910,920. Unprinted region 910 has substantially no skew; that is, the horizontal and vertical edges of region 910 are substantially parallel with the horizontal and vertical edges of medium 900. Therefore, to identify the region location and region size of the entire unprinted area of region 910, the coordinates of only two points 912,914 located at diagonally opposite corners of region 910 need be recorded. When an image is printed in an unprinted region, the edges of the image are also printed so as to be substantially parallel with the horizontal and vertical edges of medium 900.

Unprinted region 920, by comparison, is skewed with respect to the medium 900. Such skew could have resulted, for example, from misfeeding the medium 900 into a printer when it was previously printed. If the coordinates of only two points are used to define a region, then points 932 and 934 would be utilized. If points 922 and 924 were chosen instead, then images printed in the resulting region would overprint portions of the previously-printed area. However, by using all four coordinates 922,924,926,928 to define an unprinted region 920, the angle of skew can be calculated. Then, during the printing 712, the target image associated with the unprinted region 920 can be rotated by an angle equivalent to the angle of skew so as to more precisely fit the boundaries of the unprinted region 920.

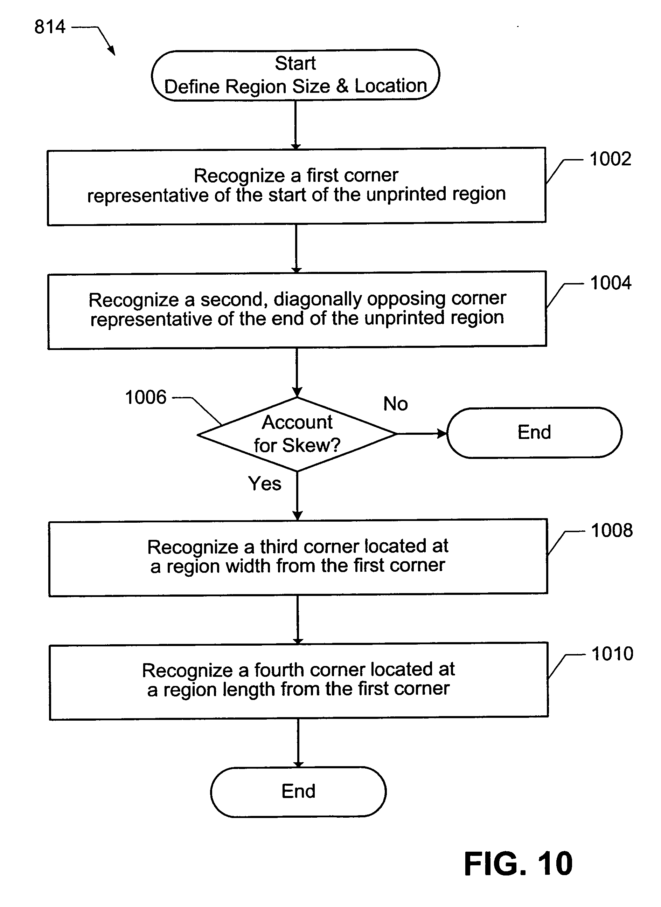

Considering now in greater detail an embodiment of the defining 814 of the region size and region location of an unprinted region, and with reference to FIG. 10, at 1002 a first corner representative of the start of the unprinted region is recognized. At 1004, a second diagonally opposing comer representative of the end of the unprinted region is recognized. If skew is not accounted for ("No" branch of 1006), the defining 814 ends. If skew is accounted for ("Yes" branch of 1006), then at 1008 a third corner located at a region width from the first corner is recognized. At 1010 a fourth comer located at a region length from the first comer is recognized, and the method ends. When applied to exemplary unprinted region 920, point 922 becomes the first corner, point 924 becomes the second corner, point 926 becomes the third corner, and point 928 becomes the fourth corner.

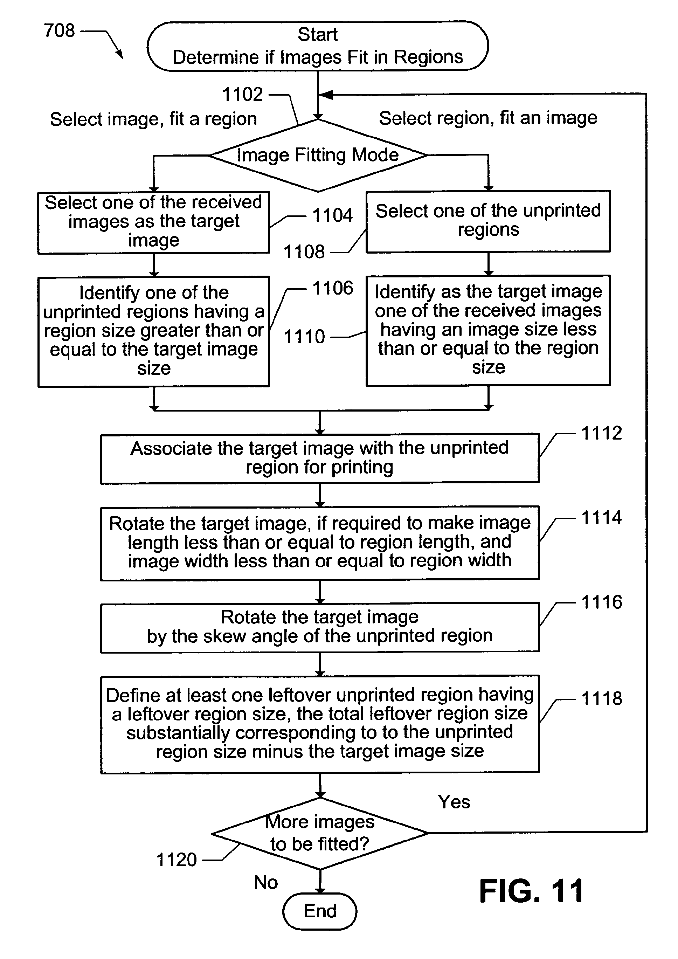

Considering now in greater detail an embodiment of the determining 708 if target images fit in unprinted regions, and with reference to FIG. 11, at 1102, the image fitting mode determines how images are fit to regions. In one mode ("Select image, fit a region" branch of 1102), one of the received images is selected as the target image at 1104, and an unprinted region having a region size greater than or equal to the target image size is identified at 1106. This mode would typically be used if there is only a single received image. In some embodiments having more than one unprinted region, the smallest unprinted region in which the target image fits is identified.

In another mode ("Select region, fit an image" branch of 1102), one of the unprinted regions is selected at 1108, and a received image having an image size less than or equal to the region size is identified as the target image at 1110. This mode would typically be used if there is only a single unprinted region. In some embodiments having more than one target image, the largest image that fits in the selected unprinted region is identified as the target image.

In either mode, the method continues at 1112, where the target image is associated with the selected unprinted region for printing in that region. At 1114, and in some embodiments, the target image is rotated, if required to make the image length be less than or equal to the region length, and/or if required to make the image width be less than or equal to the region width, so that the image will be printed within the selected region. Where the medium will be cut into individual images after it is fully printed, rotating the target image has no adverse effect and this step is typically performed. However, where the medium will not be cut into individual images but rather be kept intact such as, for example, in an image collage, this step may not be performed.

At 1116, the target image is rotated by the amount of skew, typically expressed as an angular quantity, of the unprinted region. If region skew is zero or is not calculated, the step has no effect on the target image. At 1118, one or more leftover unprinted regions, each having a leftover region size, are defined. The total leftover region size for all the leftover unprinted regions defined by this step substantially correspond to the unprinted region size minus the target image size. At 1120, it is determined whether there are more images to be fitted. If there are more images to be fitted ("Yes" branch of 1120), the determining 708 continues at 1102; otherwise, the determining 708 concludes.

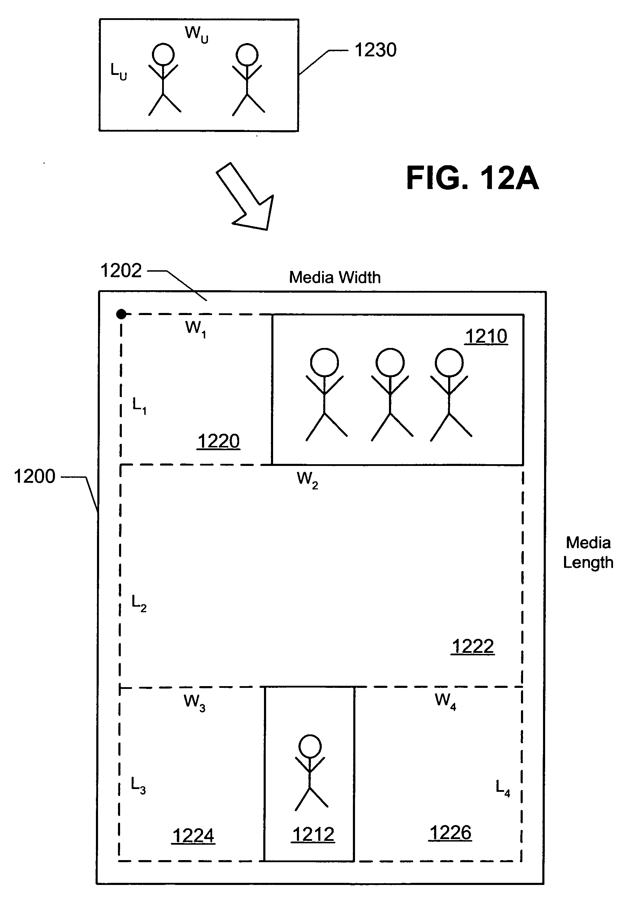

The relationship between image size and region size, and the association of images with unprinted regions, may be best understood with reference to exemplary FIGS. 12A-C. Exemplary partially-printed medium 1200 contains two rectangular printed regions 1210,1212. Medium 1200 also has an unprintable border region 1202. The border may be located along all or fewer than all edges of the medium 1200. Whether a medium includes an unprintable border region is typically determined by the characteristics of the printing system or device.

Printed regions 1210,1212 do not occupy all the printable area of medium 1200, thus leaving some portions of the printable area unprinted and available for printing additional images. The unprinted area may be organized into unprinted rectangular regions. One possible organization of the unprinted area produces four unprinted regions 1220,1222,1224,1226. Other organizations of the unprinted area into more, fewer, and/or different unprinted regions is also possible.

Each unprinted region 1220,1222,1224,1226 has a region width W and a region length L. The region width and region length define the region size of each unprinted region 1220,1222,1224,1226. Exemplary target image 1230 has an image width W_{U} and an image length L_{U}. The image width and image length define the image size of the target image 1230.

Image 1230 can be printed on medium 1200 in an unprinted region having a region size that is at least as large as the image size. For the region size to be at least as large as the image size, either (a) the region width must be at least as large as the image width, and the region length must be at least as large as the image length; or (b) the region width must be at least as large as the image length, and the region length must be at least as large as the image width. In the latter case, the image will fit in the region if it is rotated 90 degrees.

Image 1230 cannot be printed in unprinted region 1220. While L₁ of unprinted region 1220 is larger than L_{U} of image 1230, W₁ of unprinted region 1220 is smaller than W_{U} of image 1230, and thus image 1230 will not fit in unprinted region 1220 in an unrotated configuration. Furthermore, while W₁ of unprinted region 1220 is larger than L_{U} of image 1230, L₁ of unprinted region 1220 is smaller than W_{U} of image 1230, and thus image 1230 will not fit in unprinted region 1220 in a rotated configuration.

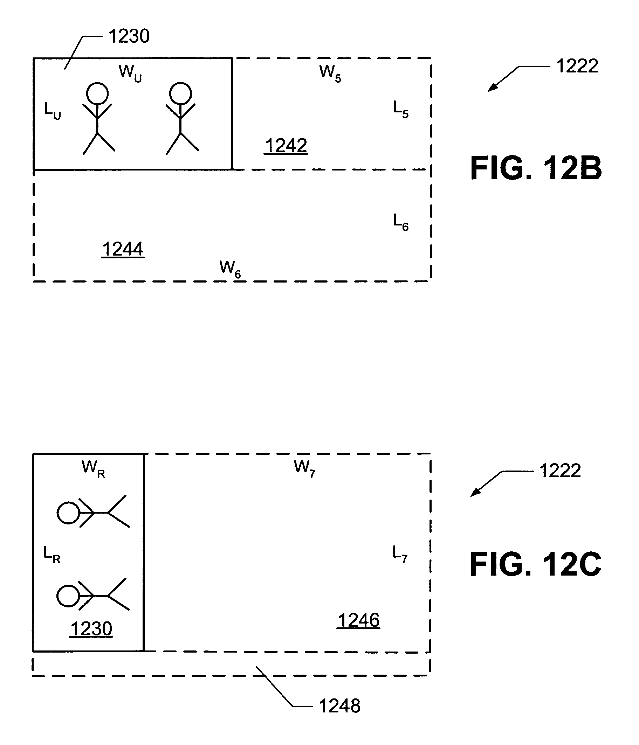

However, image 1230 can be printed in unprinted region 1222 in either an unrotated or a rotated configuration. L₂ of unprinted region 1222 is larger than L_{U} of image 1230, and W₂ of unprinted region 1222 is larger than W_{U} of image 1230, so image 1230 will fit in unprinted region 1222 in an unrotated configuration. One possible placement of unrotated image 1230 in unprinted region 1222 is shown in FIG. 12B. The leftover unprinted area of region 1222 can be organized into leftover unprinted regions 1242,1244, for example, and used to print images which fit within their leftover region sizes.

In addition, W₂ of unprinted region 1222 is larger than L_{U} of image 1230, and L₂ of unprinted region 1222 is larger than W_{U} of image 1230, so image 1230 will fit in unprinted region 1222 in a rotated configuration. One possible placement of rotated image 1230 in unprinted region 1222 is shown in FIG. 12C. The leftover unprinted area of region 1222 can be organized into leftover unprinted regions 1246,1248, for example. Some embodiments may require a certain minimum length or width to define a usable unprinted region; for example, the length of region 1248 may be too small for region 1248 to be deemed a usable unprinted region.

Furthermore, where an image fits in an unprinted region in either a rotated or unrotated configuration, in some embodiments the decision as to which orientation to use may be determined based on a factor such as, for example, the aspect ratio (i.e. the ratio of region length to region width) of the leftover unprinted region or regions. For example, if an aspect ratio of 1.0 is deemed optimal, leftover unprinted region 1246 produced by the rotated orientation of image 1230 in FIG. 12C would be more desirable than leftover regions 1242,1244 in FIG. 12B, and a rotated configuration of image 1230 would be used. Other factors, such as the number of regions or the total region size of the usable regions, could also be used to select the rotated or unrotated configuration.

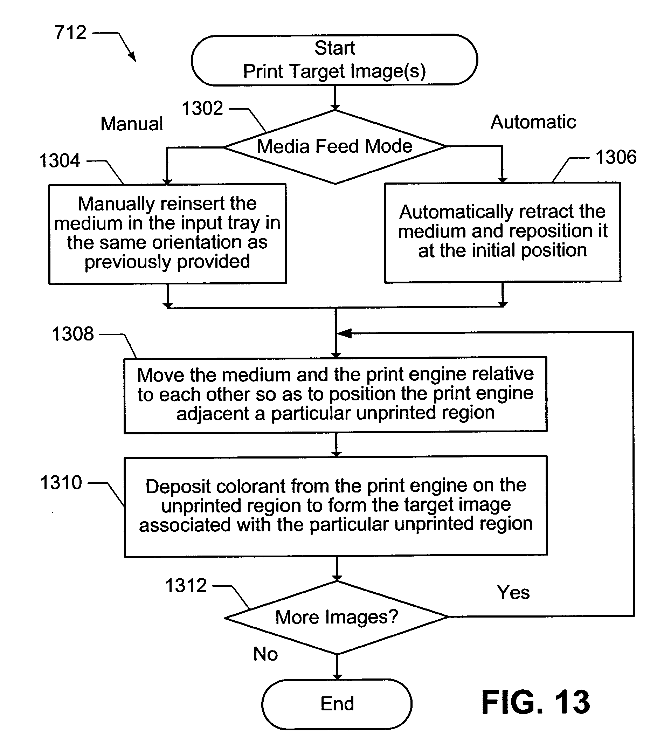

Considering now in greater detail an embodiment of the printing 712 of target images at the region location of the corresponding unprinted regions, and with reference to FIG. 13, at 1302 the media feed mode is determined. If a manual media feed mode is used ("Manual" branch of 1302), then at 1304 the medium is manually reinserted in the input tray of the printing system or device in the same orientation in which it was originally provided. If an automatic media feed mode is used ("Automatic" branch of 1302), then at 1306 the medium is automatically retracted in a direction opposite to the advance direction, and repositioned at the initial position. At 1308, the medium and/or the print engine are moved relative to each other so as to position the print engine adjacent the region location of a particular unprinted region. At 1310, colorant from the print engine is deposited on the unprinted region to form the target image associated with the particular unprinted region. If more target images are yet to be printed in corresponding unprinted regions ("Yes" branch of 1312), the method continues at 1308. Alternatively, if all target images fitted to unprinted regions have been printed, the printing 712 concludes.

From the foregoing it will be appreciated that the present invention represents a significant advance in the art. Although several specific embodiments of the invention have been described and illustrated, the invention is not limited to the specific methods, forms, or arrangements of parts so described and illustrated. For example, the invention is not limited to operation with rectangular images and regions. In addition, unprinted regions can be dynamically reorganized by, for example, combining portions of contiguous unprinted regions where is it advantageous to do so in order to fit a particular target image to the unprinted region. This description of the invention should be understood to include all novel and non-obvious combinations of elements described herein, and claims may be presented in this or a later application to any novel and non-obvious combination of these elements. The foregoing embodiments are illustrative, and no single feature or element is essential to all possible combinations that may be claimed in this or a later application. Unless otherwise specified, steps of a method claim need not be performed in the order specified. The invention is not limited to the above-described implementations, but instead is defined by the appended claims in light of their full scope of equivalents. Where the claims recite "a" or "a first" element of the equivalent thereof, such claims should be understood to include incorporation of one or more such elements, neither requiring nor excluding two or more such elements.

## Claims

1. A system (10) for printing at least one image on a partially-printed medium (50), comprising:
a print detector (20) adapted to scan the partially-printed medium (50) so as to form scan data (24);
a controller (30) coupled to the print detector (20) and adapted to analyze the scan data (24) so as to identify at least one unprinted region (54,55) on the medium (50); and
a print engine (40) coupled to the controller (30) and adapted to print the at least one image in the at least one unprinted region (54,55).

2. A printer (330) for printing image data on a partially-printed medium (50), comprising:
a sensor (410) mounted in the printer (330) for movement with respect to the partially-printed medium (50), the sensor (410) adapted to produce scan data indicative of whether printing is present at locations of the medium (50) adjacent the sensor (410);
a motion arrangement (420,430) adapted to move at least one of the sensor (410) and the medium (50) relative to each other so as to produce scan data for substantially all unprinted portions of the medium (50);
a controller (440) coupled to the motion arrangement (420,430) and the sensor (410), the controller (440) adapted to analyze the scan data so as to identify at least one unprinted region (54,55) on the medium (50), each unprinted region (54,55) having a size and a location; and
a print engine (338) coupled to the controller (440) and adapted to print the image data in the at least one unprinted region (54,55).

3. The printer (330) of claim 2, wherein the sensor (410) is a spot sensor that measures reflectance, the spot sensor further including:
a light source (520) adapted to provide incident light;
a light detector (540) adapted to measure reflected light; and
an optical arrangement (530) adapted to direct the incident light onto a specified position (510) on the medium (50) adjacent the spot sensor and to direct the reflected light from the specified position (510) to the light detector (540).

4. The printer (330) of claim 2, further including:
a scanning arrangement (310) adapted to generate the image data for a physical item placed adjacent the scanning arrangement (310).

5. The printer (330) of claim 2, further including:
a memory interface (350) adapted to receive a memory device containing the image data for at least one digital image; and
a user interface adapted to select individual ones of the at least one digital image to be printed, and further adapted to specify for each selected digital image a number of copies to be printed and an image size for each of the copies.

6. A method (700) of printing on a partially-printed medium (50), comprising:
illuminating (804) a position (510) of the medium (50) with a light source element (520) of a detector (410);
measuring (806) a reflectance of the medium (50) at the position (510) with a sensor element (540) of the detector (410), the reflectance indicative of whether printing is present at the position (510);
positioning (802,812) the detector (410) at a plurality of positions (510) of the medium (50) so as to determine a region size of at least one unprinted region (54,55) of the medium (50);
receiving (706) at least one target image (62) from an image source (60), each target image (62) having an image size;
analyzing (708) at least some of the region sizes and the image sizes so as to identify selected ones of the at least one target image to print on the medium (50); and
printing (712) the selected ones of the at least one target image in corresponding ones of the at least one unprinted region (54,55).

7. The method (700) of claim 6, further including:
recognizing (1002) a first corner (912) representative of the start of each unprinted region (54,55);
recognizing (1004) a second, diagonally opposing comer (914) representative of the end of the unprinted region (54,55) ; and
storing coordinate information for the first (912) and second (914) comers, wherein the coordinate information is indicative of the region size (212) and the region location (212).

8. The method (700) of claim 6, further including:
placing (702) the partially-printed medium (50) in an input tray (332), the medium (50) having a given orientation with respect to the input tray (332).

9. The method (700)of claim 8, wherein the positioning (802,812) further includes picking the medium (50) from the input tray (332) and advancing the medium (50) in a first direction from an initial position, the method (700) further comprising:
automatically retracting (1306) the medium (50) in a second direction opposite to the first direction so as to reposition the medium (50) at the initial position.

10. The method of claim 8, wherein the positioning (802,812) further includes picking the medium (50) from the input tray (332) and advancing the medium (50) in a first direction from an initial position, the method (700) further comprising:
manually reinserting (1304) the medium (50) in the input tray (332) at the given orientation.
